# EUROPÄISCHE PATENTSCHRIFT

(11) **EP 2 060 210 B1**
(45) Veröffentlichungstag und Bekanntmachung des Hinweises auf die Patenterteilung: **25.05.2011**
(21) Anmeldenummer: 08018778.4
(22) Anmeldetag: 28.10.2008
(51) Int. Cl.: A47J 27/08, A47J 27/02

(54) **Behälter für Speisen**
Container for food
Récipient pour plats préparés

(30) Priorität: 19.11.2007 DE 102007057102; 24.06.2008 DE 202008008667 U
(43) Veröffentlichungstag der Anmeldung: 20.05.2009
(73) Patentinhaber: Rieber GmbH & Co. KG, 72770 Reutlingen (DE)
(72) Erfinder: Maier, Max, 71636 Ludwigsburg (DE)
(74) Vertreter: Patentanwälte Ruff, Wilhelm, Beier, Dauster & Partner

(56) Entgegenhaltungen:
- DE-U1- 20 316 277
- GB-A- 2 417 875

## Beschreibung

Die Erfindung betrifft einen Behälter für Speisen zum Niederdruckgaren mit einem Unterteil und einem lösbar mit dem Unterteil verbundenen Oberteil, wobei wenigstens das Oberteil aus mikrowellendurchlässigem Material besteht und wobei das Oberteil und das Unterteil einen abgedichteten Innenraum bilden.

Aus der europäischen Patentschrift EP 0 971 849 B1 ist eine Transport- und/oder Verkaufsverpackung für Lebensmittel bekannt, die dafür vorgesehen ist, in einem Mikrowellengerät erhitzt zu werden. Diese Verpackung ist als Einwegverpackung ausgebildet und besteht aus einem schalenförmigen Behälter, der mit einer Folie dicht verschlossen ist und der wenigstens teilweise rohe Lebensmittel enthält. Die Folie, mit der der Behälter verschlossen wird, enthält ein Ventil, um während der Zubereitung innerhalb des Gefäßes einen Überdruck aufrecht zu erhalten. Unterhalb eines inneren Überdrucks von ca. 0,5mbar ist das Ventil geschlossen, um während des Transports zu verhindern, dass Verunreinigungen in den Behälter eintreten können. Beim Erhitzen der Lebensmittel innerhalb des Behälters öffnet das Ventil bei einem Überdruck von 3+-1mbar. Da die Öffnung des Ventils allerdings sehr klein ist, können während der Zubereitung der Lebensmittel im Mikrowellengerät gegen Ende der Garzeit Temperaturen bis zu 150°C und ein Überdruck von bis zu 3bar erreicht werden.

Aus dem deutschen Gebrauchsmuster DE 20 2004 006 556 U1 ist ein Speisenbehälter für das Mikrowellengaren bekannt, der ein Unterteil und ein Oberteil aufweist, die fest miteinander verbunden werden können und dadurch einen abgedichteten Innenraum bilden. Bei der Zubereitung von Speisen in diesem Behälter in einem Mikrowellengerät kann sich innerhalb des Behälters ein Überdruck von 1,2bar ausbilden, wird dieser Überdruck von 1,2bar überschritten, wird ein umlaufender Gummipuffer an der Schnittstelle zwischen Unterteil und Deckel zusammengedrückt. Der Deckel hebt sich ein Stück weit vom Unterteil ab und Dampf kann aus dem Innenraum in die Umgebung entweichen, so dass ein Überdruck im Innenraum 1,2bar nicht übersteigt.

Aus dem deutschen Gebrauchsmuster DE 203 16 277 U1 ist ebenfalls ein Speisenbehälter für das Mikrowellengaren bekannt, bei dem ein mit Speisen gefülltes Unterteil mittels eines Deckels verschlossen und dann in ein Mikrowellengerät gestellt wird. Auch hier soll sich während des Garens ein Überdruck von etwa 1 bar im Behälter ausbilden. Der Deckel ist mit einem Rastverschluss auf das Unterteil aufgesetzt, wobei eine Rastnase des Deckels an einem Gummipuffer angreift. Wird der vorgegebene Innendruck überschritten, wird der Gummipuffer komprimiert und der Deckel hebt ein Stück weit vom Unterteil ab, so dass überschüssiger Dampf aus dem Innenraum entweichen kann.

Aus dem US-Patent 2,622,187 ist ein Druckkochtopf für Mikrowellengeräte mit einem Überdruckventil bekannt.

Mit der Erfindung soll ein Behälter für Speisen bereitgestellt werden, der bei einfachem Aufbau das zuverlässige und sichere Mikrowellengaren oder Niederdruckgaren in Mikrowellenöfen von Lebensmitteln erlaubt.

Erfindungsgemäß ist hierzu ein Behälter für Speisen mit einem Unterteil und einem lösbar mit dem Unterteil verbundenen Oberteil vorgesehen, wobei wenigstens das Oberteil aus mikrowellendurchlässigem Material besteht und wobei das Oberteil und das Unterteil einen abgedichteten Innenraum bilden. Das Unterteil und das Oberteil sind mittels eines Rastverschlusses miteinander verbunden, der bei einem vordefinierten Überdruck von weniger als 0,5 bar, insbesondere weniger als 0,05 bar, im Innenraum eine Verbindung zwischen Unterteil und Oberteil freigibt. Der Rastverschluss weist wenigstens eine Rastnase auf, die einen Rastvorsprung hintergreift, wobei die Rastnase und/oder der Rastvorsprung eine Rastfläche aufweisen, die in Bezug auf eine Richtung, in der Oberteil und Unterteil voneinander getrennt werden können, schräg angeordnet ist.

Überraschenderweise hat sich gezeigt, dass auch bei sehr geringem Überdruck von weniger als 0,5 bar und sogar bei weniger als 0,05bar, beispielsweise bei 20 mbar bis 40 mbar, erhebliche Vorteile beim Mikrowellengaren von Speisen erzielt werden können. Bereits bei solch geringen Überdrücken lassen sich gegenüber dem drucklosen Mikrowellengaren kürzere Garzeiten erreichen und es findet überraschenderweise auch ein Garzeitausgleich statt, so dass an und für sich unterschiedliche Garzeiten benötigende Lebensmittel gleichzeitig fertig gegart sind. Indem der Behälter einen Rastverschluss aufweist, der eine Verbindung zwischen Unterteil und Oberteil bei einem vordefinierten Überdruck von weniger als 0,5bar frei gibt, ist der erfindungsgemäße Speisenbehälter sicher zu betreiben, da kein gefährlicher Überdruck entstehen kann. Der bei dem erfindungsgemäßen Behälter verwendete Rastverschluss ist in besonders einfacher Weise ausgebildet und weist eine schräg angeordnete Rastfläche auf. Bei zu hohem Überdruck im Innenraum werden das Unterteil und das Oberteil auseinandergedrückt. Über die schräg angeordnete Rastfläche wird eine solche in Öffnungsrichtung wirkende Kraft in eine seitlich wirkende Kraft umgesetzt und die Rastnase oder der Rastvorsprung werden seitlich ausgelenkt, so dass der Rastverschluss freigegeben wird. Sobald der Rastverschluss freigegeben ist, können sich Unterteil und Oberteil voneinander weg bewegen und Überdruck aus dem Innenraum kann entweichen. Die Erfindung ermöglicht es in besonders einfacher Weise, einen bei zu hohem Überdruck öffnenden Rastverschluss bereitzustellen. Äußerst vorteilhaft ist dabei, dass der Rastvorsprung oder die Rastnase durch die schräge Rastfläche zwar ausgelenkt werden müssen, es ist aber möglich, sowohl Unterteil als auch Oberteil als jeweils einstückige Kunststoffspritzteile auszuführen, da die Elastizität geeigneter Kunststoffe ausreicht, um die Rastnase oder den Rastvorsprung ausreichend flexibel zu lagern. Die Ausbildung des Rastverschlusses mit einer schrägen Rastfläche sowie einer Rastnase und einem Rastvorsprung ermöglicht es, das Unterteil und das Oberteil glattflächig und mit nur wenigen Hinterschnitten auszubilden, so dass die Reinigung des erfindungsgemäßen Behälters einfach möglich ist.

In Weiterbildung der Erfindung ist die Rastfläche von einer Mittelachse des Behälters aus nach außen weisend angeordnet.

In Öffnungsrichtung des Behälters gesehen verläuft die schräge Rastfläche somit von der Mittelachse weg. Die auf der schrägen Rastfläche geführte Rastnase wird somit beim Öffnen des Behälters nach außen gedrückt. Auf diese Weise kann das Oberteil als den oberen Rand des Unterteils umfangendes Bauteil ausgebildet werden. Dies ermöglicht eine glattflächige Gestaltung des Oberteils und des Unterteils, so dass der erfindungsgemäße Behälter leicht gereinigt werden kann.

In Weiterbildung der Erfindung ist der vordefinierte Überdruck kleiner oder gleich 0,3bar, insbesondere kleiner oder gleich 40 mbar.

Das Auslegen des Rastverschlusses und des Behälters auf einen öffnungsdruck kleiner oder gleich 40 mbar ermöglicht den sehr sicheren Betrieb des erfindungsgemäßen Behälters, da im Innenraum kein gefährlicher Überdruck auftreten kann.

In Weiterbildung der Erfindung weisen das Unterteil oder das Oberteil wenigstens einen umlaufenden und im Wesentlichen parallel zu einer Richtung, in der Oberteil und Unterteil voneinander getrennt werden können, sich erstreckenden Vorsprung auf, der eine kegelstumpfförmige Außenfläche aufweist, die sich in die Richtung verjüngt, in der Oberteil und Unterteil voneinander getrennt werden können, und am Oberteil bzw. am Unterteil ist eine passende, kegelstumpfförmige Gegenfläche vorgesehen. Das Unterteil bzw. das Oberteil kann eine zu dem Vorsprung passende umlaufende Rinne zum wenigstens abschnittsweisen Aufnehmen des Vorsprungs aufweisen. Der Vorsprung und/oder die Rinne können einen trapezförmigen Querschnitt aufweisen.

Überraschenderweise hat sich herausgestellt, dass durch Vorsehen eines solchen umlaufenden Vorsprungs und einer hierzu passenden Gegenfläche bzw. einer Rinne auch ohne Vorsehen von Dichtungslippen eine zuverlässige Abdichtung des Behälters erreicht werden kann. Der Verzicht auf Dichtlippen ermöglicht es zum einen, sowohl das Unterteil als auch das Oberteil des Behälters jeweils einstückig ausführen zu können. Der Verzicht auf gegebenenfalls einteilig angespritzte Dichtlippen erhöht aber auch die Stabilität des erfindungsgemäßen Behälters wesentlich, so dass dieses im Gemeinschaftsverpflegungsbereich einsetzbar ist.

In Weiterbildung der Erfindung weisen der Vorsprung und/oder die Rinne einen trapezförmigen Querschnitt auf, der sich in der Richtung, in der Oberteil und Unterteil voneinander getrennt werden können, verjüngt.

Auf diese Weise kann ein stabiler Halt des Oberteils auf dem Unterteil erreicht werden und das Aufsetzen des Oberteils auf das Unterteil wird erleichtert, da der Vorsprung mit trapezförmigem Querschnitt und die Rinne eine Selbstzentrierungswirkung haben. Es hat sich auch herausgestellt, dass durch eine solche Formgebung des Vorsprungs und/oder der Rinne eine ausreichende Druckdichtigkeit auch ohne Vorsehen zusätzlicher Dichtungen erzielt wird.

Die Rinne und der Vorsprung sind dabei so ausgebildet, dass bei vollständig aufgesetztem Oberteil, d.h. verrastetem Rastverschluss, kein Strömungskanal aus dem Innenraum in die Umgebung besteht.

In Weiterbildung der Erfindung bestehen das Oberteil und/oder das Unterteil aus flexiblem und spülmaschinenfestem Kunststoff.

Eine Flexibilität des Kunststoffs wird dabei nur in soweit benötigt, als dass die Rastnase oder der Rastvorsprung an dem Rastverschluss so beweglich sein müssen, um bereits bei einem sehr geringen Überdruck von etwa 40mbar über die schräge Rastfläche ausgelenkt zu werden und dadurch den Rastverschluss teilweise zu öffnen. Als Kunststoff kann beispielsweise Polysulfon oder Polycarbonat verwendet werden.

In Weiterbildung der Erfindung ist das Unterteil zum Aufnehmen eines Speisentellers vorgesehen und weist Auflagevorsprünge auf, um den Speisenteller in Umfangrichtung gesehen lediglich abschnittsweise zu unterstützen.

Indem ein Speisenteller in den Behälter eingebracht werden kann, entfällt die Notwendigkeit, die gegarten Speisen aus dem Behälter auf einen Teller umfüllen zu müssen. Natürlich ist es durchaus üblich, Speisen aus den Garbehältern selbst zu verzehren, dies ist jedoch oft unbefriedigend und auch unerwünscht. Besonders vorteilhaft an dem erfindungsgemäßen Behälter ist, dass dieser für unterschiedliche Teller eingesetzt werden kann. Normale Speisenteller sind, sofern sie nicht metallbeschichtet sind, mikrowellentauglich. Der erfindungsgemäße Speisenbehälter kann daher im Gemeinschaftsverpflegungsbereich mit bereits vorhandenen Tellern eingesetzt werden und erfordert keine Spezialteller. Der erfindungsgemäße Behälter kann beispielsweise auch mehrere in radialer Richtung voneinander beabstandete Auflagevorsprünge aufweisen, um Teller unterschiedlicher Form aufzunehmen. Die Anordnung der Auflagevorsprünge in Umfangsrichtung voneinander beabstandet ermöglicht es, dass beim Garen innerhalb des Behälters entstehender heißer Dampf auch an die Unterseite des Tellers gelangt und diese dadurch erwärmen kann. Die zu garenden Speisen auf dem Teller werden dadurch einerseits direkt durch die eindringenden Mikrowellen erhitzt, weiterhin durch den im Behälter entstehenden Dampf und schließlich auch indirekt über die Erwärmung des Tellers selbst. Dies führt zu einem sehr gleichmäßigen und dennoch schnellen Garprozess. Auch nach dem Entnehmen des Speisentellers aus dem Behälter bleibt dieser aufgrund seiner Wärmespeicherkapazität noch eine Zeitlang warm, so dass die zubereiteten Speisen vergleichsweise lange im erwärmten Zustand verbleiben. Ein Transport der erwärmten Speisen im erfindungsgemäßen Behälter kann für bis zu 15 min. erfolgen, ohne dass die Speisentemperatur unter 65°C absinkt.

Auflagevorsprünge für einen Speisenteller können in Umfangsrichtung voneinander beabstandet unterhalb des Randbereichs eines eingesetzten Speisetellers angeordnet sein. Der erfindungsgemäße Speisenbehälter ist daher mit unterschiedlichen Speisentellern kombinierbar, so dass bereits vorhandene Speisenteller weiter verwendet werden können. Dies ist vor allem im Gemeinschaftsverpflegungsbereich von entscheidender Bedeutung, da üblicherweise ein Großteil der Gerätschaften zur Speisenverteilung auf die vorhandene Tellergröße und Tellerart abgestimmt ist.

In Weiterbildung der Erfindung weist das Unterteil im Bereich seiner Standfläche wenigstens einen Stapelvorsprung und/oder wenigstens eine Stapelvertiefung auf und das Oberteil weist an seiner Oberseite eine passende Stapelvertiefung bzw. einen passenden Stapelvorsprung auf.

Auf diese Weise können mehrere der erfindungsgemäßen Behälter problemlos und sicher gestapelt werden. Dies ist nicht nur bei der Aufbewahrung der Behälter im leeren Zustand sondern auch beim Transport von bereits im Behälter befindlicher Speisen von großem Vorteil.

Auf einer Oberseite des Oberteils kann eine Vertiefung vorgesehen sein, an deren Boden sich ein griffartiger Vorsprung befindet. Auf diese Weise kann am Oberteil ein Griff zum Abheben des Oberteils vorgesehen werden, ohne dass die Stapelbarkeit des erfindungsgemäßen Behälters beeinträchtigt wird. Zweckmäßigerweise sind sowohl am Unterteil als auch am Oberteil jeweils zwei einander radial gegenüberliegende Griffabschnitte vorgesehen. An diesen Griffabschnitten kann der erfindungsgemäße Behälter zum einen getragen werden, zum anderen werden die Griffabschnitte des Oberteils und des Unterteils aber auch genau übereinander angeordnet, so dass das Oberteil leicht vom Unterteil getrennt werden kann. Die Griffabschnitte sind vorteilhafterweise so angeordnet, dass sich durch Auseinanderbewegen der Griffabschnitte von Oberteil und Unterteil der Rastverschluss lösen lässt.

In Weiterbildung der Erfindung ist eine den Innenraum begrenzende Innenfläche des Oberteils glattflächig und ohne Vorsprünge ausgebildet. Auf diese Weise kann sich während des Garens im Innenraum bildendes Kondenswasser nicht in größeren Mengen am Oberteil sammeln und an Vorsprüngen oder Kanten abtropfen, sondern fließt entlang der Innenfläche des Oberteils am Rand des Tellers vorbei und in das Unterteil ab. Dieser Effekt kann zum einen durch eine entsprechende glattflächige Gestaltung der Innenfläche mit gerundeten, sanften Übergängen zwischen oberer Innenwand und den gerundeten Seitenflächen unterstützt werden. Darüber hinaus weist die Innenfläche eine durchgehende, vom Innenraum aus gesehen nach außen gerichtete Krümmung auf, so dass sich an der Innenfläche niederschlagendes Kondenswasser der Schwerkraft folgend in das Unterteil abfließen kann. Darüber hinaus kann die Ansammlung größerer Mengen von Kondenswasser auch durch das Aufbringen einer superhydrophoben Nanobeschichtung auf die Innenfläche des Oberteils unterstützt werden. Kondenswasser kann sich dadurch lediglich in sehr kleinen Tropfen an der Innenfläche des Oberteils bilden, die dann, der Schwerkraft folgend, sofort seitlich um den Speisenteller herum in das Unterteil abfließen. Als superhydrophobe Nanobeschichtungen werden nanostrukturierte Oberflächen bezeichnet, bei denen die Kontaktfläche und damit die Adhäsionskraft zwischen Oberfläche und auf ihr liegenden Wassertropfen so stark reduziert wird, dass es zur Selbstreinigung kommt. Der zugrundeliegende Effekt wird auch als Lotuseffekt bezeichnet. Superhydrophobe Oberflächen bilden mit Wassertropfen einen Kontaktwinkel von mehr als 90° und insbesondere mehr als etwa 120° aus. Beispielsweise können Kontaktwinkel von bis zu 160° erreicht werden. Eine superhydrophobe Nanobeschichtung kann beispielsweise in sehr einfacher Weise durch Aufsprühen oder Aufwischen eines geeigneten Beschichtungsmaterials aufgebracht werden.

Weitere Merkmale und Vorteile der Erfindung ergeben sich aus der folgenden Beschreibung bevorzugter Ausführungsformen der Erfindung im Zusammenhang mit den Zeichnungen. Einzelmerkmale der unterschiedlichen beschriebenen Ausführungsformen lassen sich dabei in beliebiger Weise kombinieren, ohne den Rahmen der Erfindung zu überschreiten. In den Zeichnungen zeigen:
- Fig. 1: einen erfindungsgemäßen Behälter für Speisen in perspektivi- scher Darstellung von schräg oben,
- Fig. 2: den Behälter der Fig. 1 von schräg unten,
- Fig. 3: eine Schnittansicht des Behälters der Fig. 1, wobei im Innen- raum des Behälters schematisch unterschiedliche einsetzbare Teller dargestellt sind,
- Fig. 4: eine Seitenansicht des Behälters der Fig. 1,
- Fig. 5: eine Draufsicht auf den Behälter der Fig. 1,
- Fig. 6: eine Schnittansicht auf die Ebene VI-VI der Fig. 5,
- Fig. 7: die vergrößerte Darstellung der Einzelheit VII der Fig. 6,
- Fig. 8: eine Schnittansicht auf die Ebene VIII-VIII der Fig. 5,
- Fig. 9: die Einzelheit IX der Fig. 8 in vergrößerter Darstellung,
- Fig. 10: eine perspektivische Ansicht des Oberteils des Behälters der Fig. 1 von schräg oben,
- Fig. 11: eine perspektivische Ansicht des Oberteils der Fig. 10 im um- gedrehten Zustand,
- Fig. 12: eine perspektivische Ansicht von schräg oben des Unterteils des Behälters der Fig. 1,
- Fig. 13: eine perspektivische Ansicht des Unterteils der Fig. 12 im um- gedrehten Zustand,
- Fig. 14: eine Seitenansicht eines erfindungsgemäßen Behälters gemäß einer weiteren Ausführungsform der Erfindung,
- Fig. 15: eine Ansicht des Behälters der Fig. 14 von oben,
- Fig. 16: eine Schnittansicht des Behälters der Fig. 15 auf die Ebene XVI-XVI,
- Fig. 17: eine Schnittansicht des Behälters der Fig. 15 auf die Schnitt- ebene XVII-XVII,
- Fig. 18: die vergrößerte Darstellung der Einzelheit XVIII aus Fig. 16,
- Fig. 19: eine Seitenansicht des Oberteils des Behälters der Fig. 14,
- Fig. 20: eine Ansicht des Oberteils der Fig. 19 von oben,
- Fig. 21: eine Schnittansicht des Oberteils der Fig. 20 auf die Schnitt- ebene XXI-XXI,
- Fig. 22: eine perspektivische Ansicht des Oberteils der Fig. 19 von schräg unten,
- Fig. 23: eine perspektivische Ansicht des Oberteils der Fig. 19 von schräg oben,
- Fig. 24: eine Seitenansicht des Unterteils des Behälters der Fig. 14,
- Fig. 25: eine Ansicht des Unterteils der Fig. 24 von oben,
- Fig. 26: eine Schnittansicht des Unterteils der Fig. 25 auf die Schnitt- ebene XXVI-XXVI,
- Fig. 27: eine perspektivische Ansicht des Unterteils der Fig. 24 von schräg oben und
- Fig. 28: eine perspektivische Ansicht des Unterteils der Fig. 24 von schräg unten.

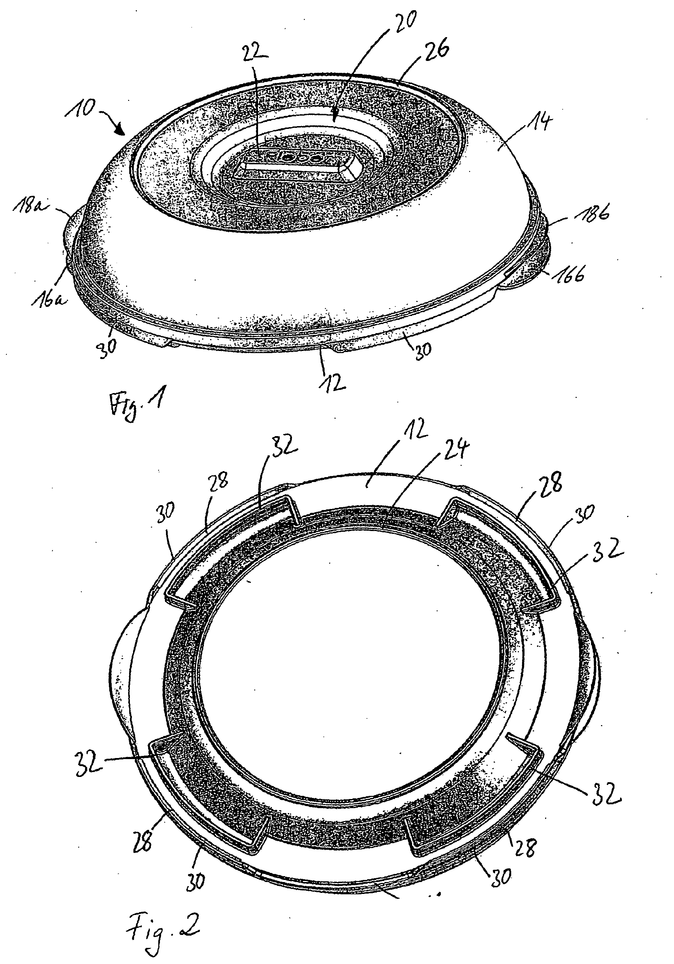

In der Darstellung der Fig. 1 ist ein erfindungsgemäßer Behälter 10 zu erkennen, der ein Unterteil 12 und ein auf das Unterteil 12 aufgesetztes Oberteil 14 aufweist. Das Unterteil 12 ist an radial einander gegenüberliegenden Positionen mit Grifflaschen 16a, 16b versehen. In einer Richtung, in der das Oberteil 14 vom Unterteil 12 abgehoben werden kann, ist gegenüberliegend zur Grifflasche 16a am Oberteil 14 eine Grifflasche 18a angeordnet und gegenüberliegend zur Grifflasche 16b ist am Oberteil 14 eine Grifflasche 18b angeordnet. Ein Benutzer, beispielsweise ein Patient auf einer Krankenstation, kann jeweils einen oder mehrere Finger zwischen die Grifflaschen 16a, 18a bzw. 16b, 18b einführen. Durch Einsatz lediglich von Zeige- oder Mittelfinger und Daumen können das Oberteil 14 und das Unterteil 12 dann getrennt werden. Die Grifflaschen 16a, 18a 16b, 18b eignen sich darüber hinaus selbstverständlich auch zum beidhändigen Tragen des Behälters 10.

Das Oberteil 14 weist an seiner Oberseite eine Vertiefung 20 auf, an deren Grund ein Griffelement 22 angeordnet ist. Die versenkte Anordnung des Griffelements 22 erlaubt es, mehrere Behälter 10 aufeinander zu stapeln und dennoch die Möglichkeit zu schaffen, ein leicht zu ergreifendes Griffelement 22 im Oberteil 14 vorzusehen.

In der Darstellung der Fig. 2, die den Behälter 10 von schräg unten zeigt, ist zu erkennen, dass das Unterteil 12 im Bereich seiner Standfläche einen umlaufenden Vorsprung 24 aufweist. Dieser Vorsprung 24 ist größenmäßig auf den äußeren Rand 26 der Vertiefung 20 am Oberteil 14 abgestimmt, so dass das Unterteil 12 mit dem Vorsprung 24 auf das Oberteil 14 aufgesetzt werden kann und durch den am Rand 26 anliegenden Vorsprung 24 sicher in der gestapelten Position gehalten wird. Auf diese Weise lassen sich zahlreiche Behälter 10 sicher stapeln. Die Möglichkeit, zahlreiche Behälter 10 sicher zu stapeln, ist zum einen für die reine Aufbewahrung der Behälter 10 von Bedeutung, sie ist aber auch äußerst vorteilhaft, wenn mit Speisen gefüllte Behälter 10 transportiert werden müssen, beispielsweise von einem Kühlraum zu einer Station, in der die enthaltenen Speisen dann fertig gegart werden.

In der Darstellung der Fig. 2 ist zu erkennen, dass das Oberteil 14 insgesamt vier in Umfangsrichtung gleichmäßig voneinander beabstandete Rastnasen 28 aufweist, die jeweils einen umlaufenden Rastvorsprung am Unterteil 12 hintergreifen und dadurch das Oberteil 14 sicher auf dem Unterteil 12 halten. Die Rastvorsprünge 28 erstrecken sich jeweils über einen Winkelbereich von etwa 20° und sind jeweils an einer Schürze 30 angeordnet. Die Schürzen 30 erstrecken sich ebenfalls nur über einen Winkelbereich von etwas mehr als 20° entlang dem Umfang des Oberteils 14. Die Schürzen 30 sind dadurch vergleichsweise flexibel, so dass die Rastnasen 42 bereits durch einen geringen Innendruck im Behälter 10 ausgelenkt werden können.

Das Unterteil 12 weist darüber hinaus Versteifungselemente 32 auf, die U-förmig ausgebildet sind, wobei sich eine Basis der Versteifungen 32 über einen Winkelbereich von etwa 20° erstreckt und die Schenkel der Versteifungen 32 in radialer Richtung auf eine Mittelachse des Unterteils 12 zulaufen. Die Versteifungen 32 sind in einem von der Bodenfläche ansteigenden Teil des Unterteils 12 angeordnet und können gleichzeitig als Griffmulden für den einfachen Transport des Behälters 10 verwendet werden.

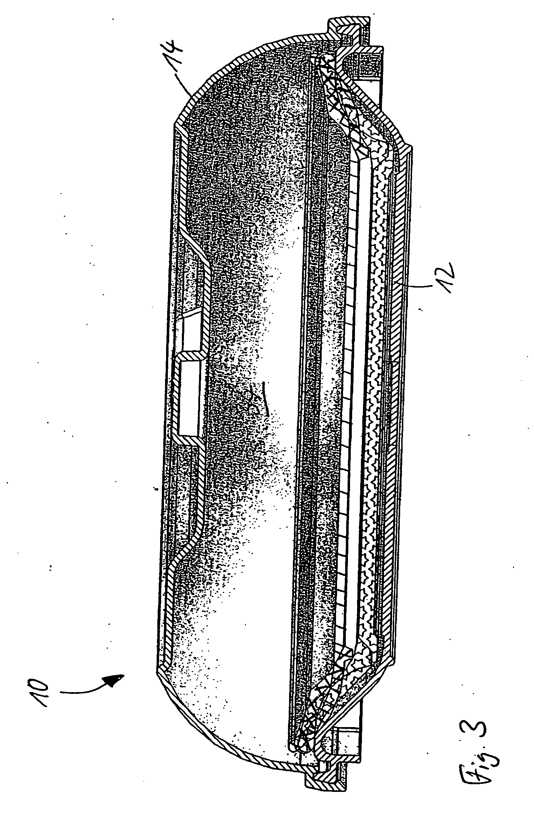

Die Darstellung der Fig. 3 zeigt eine Schnittansicht des Behälters 10 der Fig. 1. Zur Verdeutlichung sind in einen Innenraum 34 des Behälters 10 insgesamt drei unterschiedliche Speisenteller eingesetzt dargestellt. Ein erster Speisenteller ist mit einer sternförmigen Schraffur, ein zweiter Speisenteller mit einer Kreuzschraffur und ein dritter Speisenteller mit einer einfachen Schrägschraffur versehen. Selbstverständlich kann lediglich immer nur einer der drei unterschiedlichen dargestellten Teller in den Innenraum 34 eingesetzt werden. Es ist anhand der Darstellung der Fig. 3 aber bereits gut zu erkennen, dass unterschiedliche Speisenteller in den Behälter 10 eingesetzt werden können. Der erfindungsgemäße Speisenbehälter 10 kann dadurch mit bereits vorhandenen Speisentellern eingesetzt werden. Dies ist insbesondere im Bereich der Gemeinschaftsverpflegung, wo üblicherweise bereits große Mengen von Tellern vorhanden sind und auch andere Gerätschaften auf die Größe der Teller abgestimmt sind, von erheblicher Bedeutung. Die drei unterschiedlichen dargestellten Teller weisen jeweils eine unterschiedliche Tiefe und somit auch unterschiedliche Füllmengen auf. Alle drei unterschiedlichen Speisenteller sind aber so in dem Innenraum 34 aufgenommen, dass zwischen einer jeweiligen Unterseite des Tellers und einem den Innenraum begrenzenden Boden des Unterteils 12 ein Zwischenraum vorhanden ist. Während des Garens von Speisen in der Mikrowelle kann dadurch sich im Innenraum 34 ausbildender Dampf auch an die Unterseite eines jeweiligen Speisentellers gelangen und diesen dadurch erwärmen.

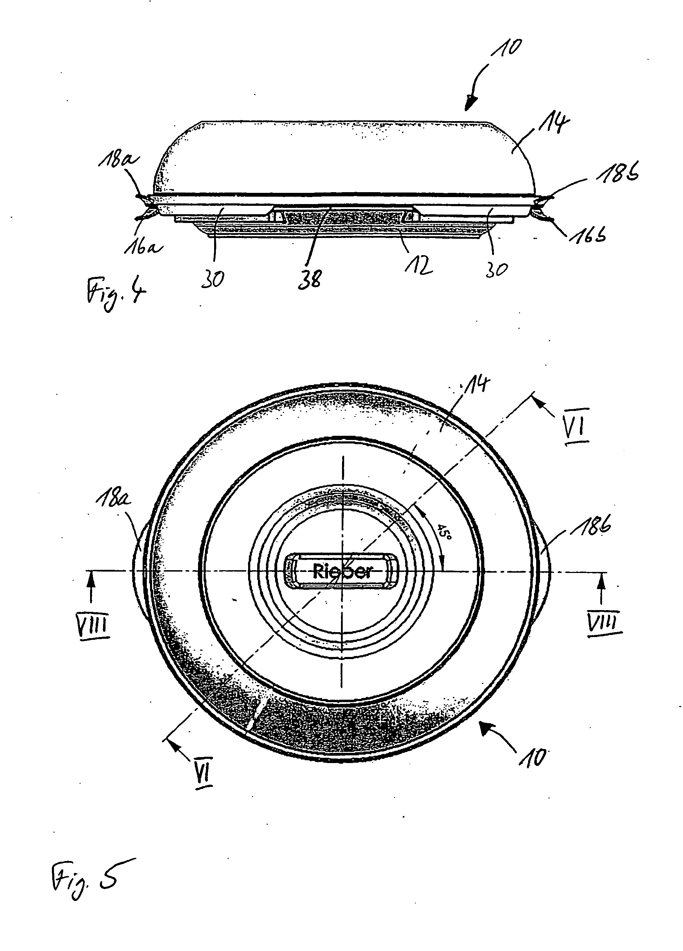

Die Darstellung der Fig. 4 zeigt den Behälter 10 in einer Seitenansicht. Gut zu erkennen ist die gekrümmte Konfiguration der Griffschalen 16a, 18a, 16b, 18b, die einander gegenüberliegend angeordnet sind und die es ermöglichen, Daumen und Zeige- und/oder Mittelfinger zwischen die jeweiligen Griffschalen 16a, 18a bzw. 16b, 18b einzulegen und das Unterteil 12 und das Oberteil 14 dann leicht voneinander zu trennen. Gut zu erkennen sind auch die Schürzen 30, die einen umlaufenden Rastvorsprung 38 am Unterteil 12 abschnittsweise übergreifen.

Die Darstellung der Fig. 5 zeigt den erfindungsgemäßen Behälter 10 in einer Draufsicht von oben. Der Behälter 10 weist eine kreisförmige Grundfläche auf, wobei lediglich die Griffschalen 18a, 18b am Oberteil 14 und die in Fig. 5 nicht sichtbaren Griffschalen 16a, 16b am Unterteil 12 über die kreisförmige Grundfläche hinausragen. Der Behälter 10 ist damit auf runde Speisenteller abgestimmt, ersichtlich können aber auch erfindungsgemäße Speisenbehälter mit anderer Grundflächenform realisiert werden, beispielsweise rechteckig zur Aufnahme rechteckiger Speisenteller oder rechteckiger Gastronormbehälter, beispielsweise auch quadratisch, dreieckig oder oval zur Aufnahme spezieller Behälter oder Platten.

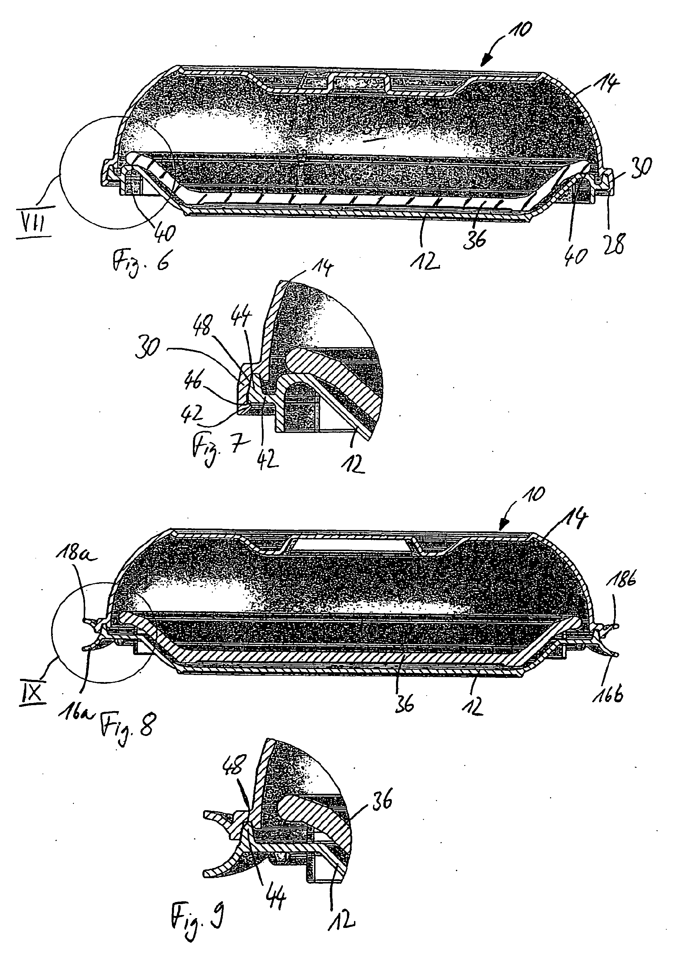

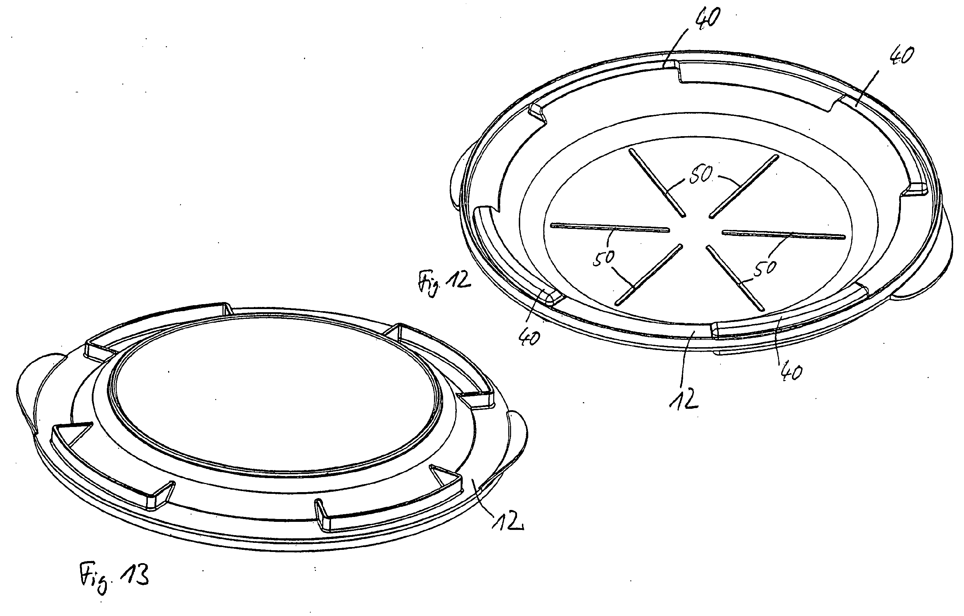

Die Darstellung der Fig. 6 zeigt eine Ansicht auf die Schnittebene VI-VI der Fig. 5. In den Innenraum 34 des Behälters 10 ist ein Speisenteller 36 eingesetzt, der lediglich in seinem äußersten Randbereich durch Auflagevorsprünge 40 unterstützt ist. Die Auflagevorsprünge 40 erstrecken sich dabei lediglich über einen Abschnitt des Umfangs des Unterteils 12 und sind darüber hinaus gleichmäßig voneinander beabstandet. Wie beispielsweise anhand von Fig. 12 zu erkennen ist, erstrecken sich die Auflageabschnitte 40 jeweils über einen Winkelbereich von etwa 20°, so dass Dampf an die Unterseite des Speisentellers 36 gelangen und diesen dadurch erwärmen kann.

Anhand der Darstellung der Fig. 6 und der Darstellung der Fig. 7, die in vergrößerter Darstellung die Einzelheit VII der Fig. 6 zeigt, ist der Rastverschluss zwischen Unterteil 12 und Oberteil 14 gut zu erkennen.

Die Rastnasen 28 am Oberteil 14 sind jeweils am unteren, freien Ende einer Schürze 30 angeordnet, die die Außenwand des Oberteils 14 nach unten fortsetzt. Die Rastnasen 28 hintergreifen einen Rastvorsprung, der als radial äußerstes Ende eines sich radial nach außen erstreckenden Steges 42 am Unterteil 12 ausgebildet ist. Der sich radial nach außen erstreckende Steg, dessen in radialer Richtung außen gelegene Kante der Rastvorsprung bildet, setzt sich in einem umlaufenden und sich parallel zur Mittelachse des Unterteils 12 erstreckenden Vorsprung 44 fort. Der Vorsprung 44 und der sich radial nach außen erstreckende Steg 42 bilden dadurch eine L-förmige Konfiguration. Der Vorsprung 44 erstreckt sich dadurch parallel zur Mittelachse des Unterteils 12 sowie des Oberteils 14 und somit parallel zu einer Richtung, in der das Oberteil 14 vom Unterteil 12 abgehoben wird.

Die Rastnase 42 weist auf ihrer, dem Rastvorsprung zugewandten Seite eine schräg angeordnete Rastfläche 46 auf. Die Rastfläche 46 ist dabei schräg nach außen gerichtet angeordnet, so dass beim Abziehen des Oberteils 14 vom Unterteil 12 die Rastnase 42 radial nach außen gedrückt wird. Das Vorsehen der schrägen Rastfläche 46 ermöglicht es, eine Kraft, die das Oberteil 14 vom Unterteil 12 wegdrückt und somit parallel zu einer Mittelachse von Unterteil 12 und Oberteil 14 wirkt, in eine radial nach außen wirkende Kraft auf die Rastnase 42 umzusetzen. Im Unterschied zu konventionellen Rastverschlüssen, die stets so ausgelegt sind, dass der Rastverschluss sich durch eine Kraft in der Richtung, in der verriegelt werden soll, nicht lösen lässt, kann der erfindungsgemäße Rastverschluss somit durch eine Kraft, die die beiden miteinander verbundenen Teile, nämlich das Oberteil 14 und das Unterteil 12, auseinanderdrückt, gelöst werden.

Für die erfindungsgemäß vorgesehene Funktion des Behälters 10 ist dies von entscheidender Bedeutung: Beim Erhitzen von Speisen auf dem Teller 36 im Innenraum 34 des Behälters 10 entsteht im Innenraum des Behälters 34 ein Überdruck. Dieser Überdruck soll einen vordefinierten Wert von weniger als 0,5bar erreichen, wobei sogar 40mbar für sehr gute Ergebnisse ausreichen. Bei einem solchen Überdruck im Innenraum 34 lassen sich Speisen schnell und in bekömmlicher Weise garen. Auf der anderen Seite muss vermieden werden, dass der Überdruck im Innenraum 34 0,3bar und in jedem Fall 0,5bar übersteigt, da andernfalls die Gefahr besteht, dass zum einen die Speisen im Innenraum 34 zu schnell und zu stark gegart werden und zum anderen dass das Oberteil 14 sich schlagartig vom Unterteil 12 trennt und dadurch für einen Benutzer gefährliche Situationen entstehen könnten. Die Flexibilität der Schürzen 30 und die Neigung der schrägen Rastfläche 46 und auch die Gestaltung des Rastvorsprungs am Unterteil 12 sind dadurch so aufeinander abgestimmt, dass sich bei einem Überdruck von etwa 0,3bar, oder, je nach konstruktiver Auslegung, sogar bei nur 40mbar, im Innenraum 34 die Rastnase 42 in der Darstellung der Fig. 7 nach links bewegt und dadurch eine geringfügige Bewegung des Oberteils 14 nach oben, vom Unterteil 12 weg, ermöglicht.

Wie in Fig. 7 zu erkennen ist, ist der umlaufende Vorsprung 44 in einer passenden Rinne 48 am Oberteil 14 aufgenommen. Da der Vorsprung 44 im Querschnitt trapezförmig ausgebildet ist, wird eine abgedichtete Verbindung zwischen Oberteil 14 und Unterteil 12 erreicht.

Ersichtlich ist durch den Rastverschluss zwischen Oberteil 14 und Unterteil 12, der mittels der Rastnase 42, der schrägen Rastfläche 46 und dem Rastvorsprung am äußeren Ende des Steges 42 realisiert ist, zum einen eine sichere und dennoch leicht lösbare Befestigung des Oberteils 14 am Unterteil 12 realisiert und gleichzeitig wird eine Möglichkeit geschaffen, einen Überdruck im Innenraum 43 auf einen vordefinierten Wert zu begrenzen.

Die trapezförmige Gestaltung des Querschnitts des umlaufenden Vorsprungs 44 und die daran angepasste Gestaltung der Rinne 48 ermöglicht darüber hinaus eine Selbstzentrierung des Oberteils 14 beim Aufsetzen auf das Unterteil 12 und darüber hinaus eine zuverlässige Abdichtung im vollständig aufgesetzten Zustand, wie er in der Fig. 7 dargestellt ist.

Die Darstellung der Fig. 8 zeigt eine Ansicht auf die Schnittebene VIII-VIII der Fig. 5. Diese Schnittebene verläuft mittig durch die Griffschalen 16a, 18a sowie 16b, 18b. Anhand der Darstellungen der Fig. 6 und 8 ist zu erkennen, dass der umlaufende Vorsprung 44 und die ebenfalls umlaufende Rinne 48 über den gesamten Umfang des Behälters 10 gleich ausgebildet sind und dadurch über den gesamten Umfang für eine zuverlässige Abdichtung zwischen Oberteil 14 und Unterteil 12 sorgen. Die Rastnasen 42 und die Schürzen 30 sind dahingegen lediglich über einen Abschnitt des Umfangs ausgebildet, um ein einfaches Lösen des Oberteils 14 vom Unterteil 12 zu ermöglichen, so dass das Oberteil 14 auch von bewegungseingeschränkten Patienten selbst vom Unterteil 12 abgehoben werden kann.

Über die Länge der Schürzen, über die sich diese entlang dem Umfang erstrecken und somit auch über die Umfangslänge der Rastnasen 42, kann die Federkraft der Schürzen 30 und somit der Überdruck eingestellt werden, ab dem sich das Oberteil 14 vom Unterteil 12 abhebt und dadurch Dampf aus dem Innenraum 34 in die Umgebung entweichen kann.

Zur leichten Bedienbarkeit des Behälters 10 und speziell zur leichten Offen- und Schließbarkeit des Behälters trägt die Gestaltung des Rastverschlusses mit den Rastnasen 42 und dem Rastvorsprung am Steg 42 bei. Denn bereits bei einer vergleichsweisen geringen Kraft eines Bedieners, die die Grifflaschen 16a und 18a bzw. 16b und 18 auseinander zieht, wird die Rastnase durch die Wirkung der schrägen Rastfläche 46 nach außen ausgelenkt und es ist daher möglich, den Rastverschluss mit vergleichsweise geringer Kraft außer Eingriff zu bringen. Dies unterscheidet den erfindungsgemäßen Behälter erheblich von konventionellen Behältern mit Rastverschlüssen, die stets so ausgebildet sind, dass sie eben nicht durch einfaches Auseinanderziehen von Oberteil und Unterteil geöffnet werden können, vielmehr ist bei konventionellen Rastverschlüssen ja gerade beabsichtigt, das Öffnen zu verhindern, wenn eine Kraft Oberteil und Unterteil auseinander zieht. Übliche Rastverschlüsse weisen daher stets zueinander parallele und zur Öffnungsrichtung senkrechte Flächen an Rastvorsprüngen und Rastnasen auf. Wie anhand der Fig. 8 zu erkennen ist, sind die Grifflaschen 16a, 18a bzw. 16b, 18b daher nicht im Bereich einer Schürze angeordnet, dennoch kann der Behälter 10 leicht geöffnet werden. Anhand der Darstellung der Fig. 8 und der vergrößerten Einzelheit IX in Fig. 9 ist zu erkennen, dass in der Schnittebene VIII-VIII der Fig. 5 der Rand des Tellers 36 nicht auf dem Unterteil 12 aufliegt. Zwischen Unterteil 12 und Teller 36 kann daher Dampf auch an die Unterseite des Tellers gelangen und diesen sowie die darin befindlichen Speisen dadurch erwärmen.

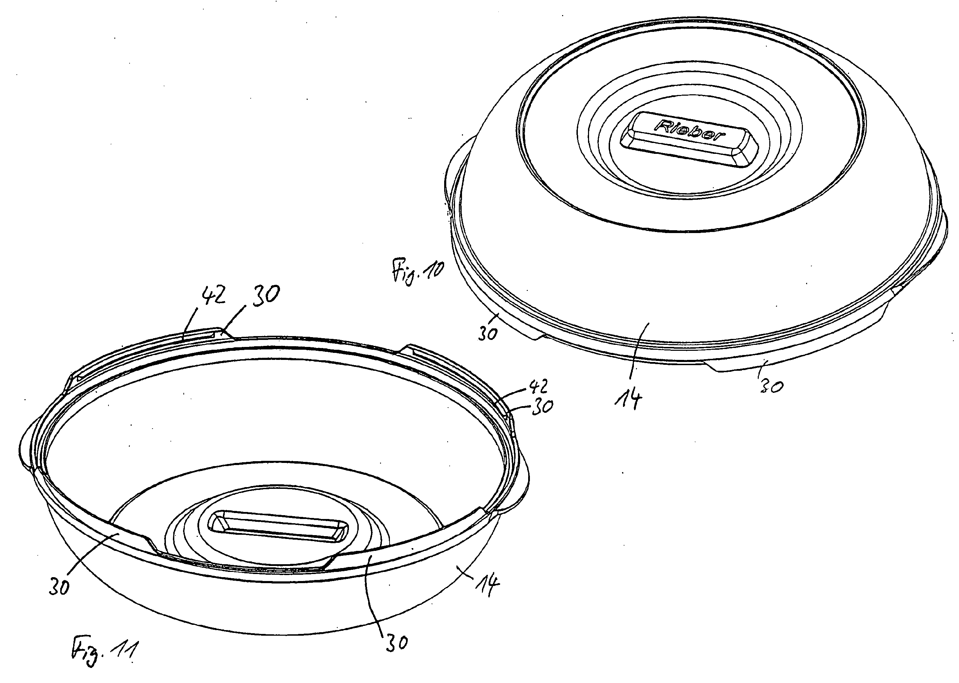

Die Darstellung der Fig. 10 zeigt das Oberteil 14 von schräg oben, die Darstellung der Fig. 11 das Oberteil 14 ebenfalls von schräg oben, allerdings im umgedrehten Zustand mit der Öffnung nach oben. Das Oberteil 14 hat die Form einer so genannten Cloche und in den Fig. 10 und 11 sind die Schürzen 30 mit den daran angeordneten Rastnasen 42 gut zu erkennen. Das Oberteil 14 ist als einstückiges Kunststoffteil ausgebildet. Da mit Ausnahme des Bereichs der Rastnasen 42 keine Hinterschnitte vorhanden sind, lässt sich das Oberteil 14 zuverlässig mittels Spritzguss oder ähnlicher Verfahren herstellen und ist problemlos in einer Spülmaschine zu reinigen.

Die Darstellung der Fig. 12 zeigt das Unterteil 12 von schräg oben und die Darstellung der Fig. 13 zeigt das Unterteil 12 ebenfalls von schräg oben, allerdings umgedreht, so dass dessen Unterseite sichtbar ist. Das Unterteil 12 weist eine allgemein schalenartige Form auf und im Bereich des Grundes der Schale sind sternförmig insgesamt sechs radial verlaufende Rippen 50 angeordnet. Diese Rippen 50 dienen einerseits zur Versteifung des Grundes des Unterteils 12, andererseits auch, um einen am Grund abgestellten Teller in einem gewissen Abstand vom Grund des Unterteils 12 zu halten, so dass, wie bereits erwähnt wurde, heißer Dampf auch an die Unterseite des Tellers gelangen kann. Der Behälter 10 ist dadurch für Teller unterschiedlichster Größen geeignet, auch wenn, wie anhand der Darstellungen der Fig. 6 und Fig. 8 bereits erläutert wurde, üblicherweise Teller verwendet werden, die so groß sind, dass ihr äußerer Rand auf den vier gleichmäßig in Umfangsrichtung voneinander beabstandeten Auflagevorsprüngen 40 aufliegt.

Anhand der Fig. 12 und 13 ist auch zu erkennen, dass das Unterteil 12 im Wesentlichen ohne Hinterschnitte ausgeformt ist, daher prozesssicher mittels Spritzguss oder ähnlichen Verfahren herstellbar und darüber hinaus gut in einer Spülmaschine zu reinigen ist.

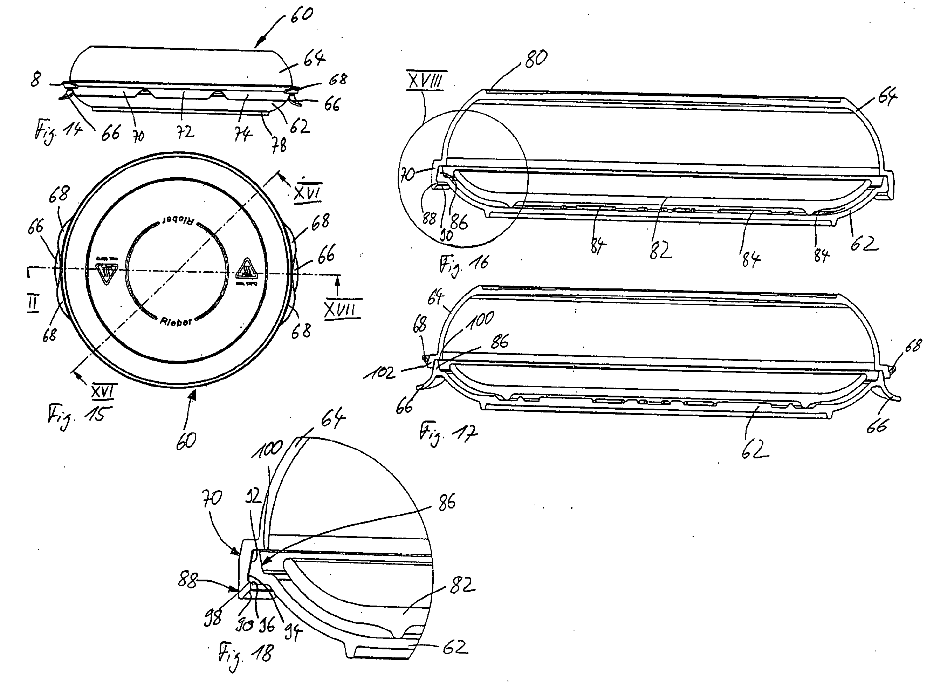

Die Darstellung der Fig. 14 zeigt in einer Seitenansicht einen weiteren erfindungsgemäßen Behälter 60 gemäß einer weiteren Ausführungsform mit einem Unterteil 62 und einem Oberteil 64. Das Unterteil 62 und das Oberteil 64 bestehen aus gespritztem Kunststoff, nämlich Polysulfon, und sind im Zustand, wie er in Fig. 14 gezeigt ist, aufeinander aufgesetzt, mittels geeigneter Rastverschlüsse miteinander verrastet und bilden dadurch einen abgedichteten Innenraum. Dieser Innenraum ist zur Aufnahme eines Speisentellers mit Speisen vorgesehen, die dann innerhalb des Behälters 60 in einem Mikrowellenofen gegart werden können. Die zu garenden Speisen können beispielsweise tief gefroren sein oder auch im lediglich gekühlten oder auch frisch vorbereiteten Zustand eingelegt werden. Das Oberteil 64 ist aus transparentem Polysulfon.

Der Behälter 60 der Fig. 14 ist in Bezug auf zahlreiche Merkmale ähnlich oder sogar identisch zum Behälter 10 aufgebaut, wie er anhand der Fig. 1 bis 13 beschrieben wurde. Im folgenden sollen daher lediglich diejenigen Merkmale des Behälters 60 beschrieben werden, die sich vom Behälter 10 unterscheiden.

Das Oberteil 64 weist mehrere Schürzen 70, 72, 74 auf, die das Unterteil 62 in dessen oberen Randbereich abschnittsweise umfangen. Wie noch erläutert werden wird, sind aber lediglich die Schürzen 70, 74 sowie achsensymmetrisch hierzu angeordnete Schürzen, die in Fig. 14 nicht zu erkennen sind mit Rastnasen an ihrem unteren Ende versehen, um am Unterteil 62 anzugreifen. Die Schürze 72 weist keine Rastnase auf und liegt lediglich außen an einem Umfang des Unterteils 62 an oder weist sogar einen geringen Abstand zum Außenumfang des Unterteils 62 auf. Über das Vorsehen von Rastnasen an den Schürzen 70, 72, 74 bzw. dem Weglassen von Rastnasen, kann ein Druck im Innenraum des Behälters 60, bei dem sich das Oberteil 64 vom Unterteil 62 löst, eingestellt werden.

Wie der Behälter 10 gemäß Fig. 1 ist der Behälter 60 an seinem Unterteil 62 mit einem umlaufenden Stapelrand 78 versehen, der, siehe Fig. 16, in eine passende Ausnehmung 80 am Oberteil 64 eingreifen kann. Mehrere der Behälter 60 sind dadurch problemlos und sicher stapelbar.

Die Darstellung der Fig. 15 zeigt den Behälter 60 von oben. Auf der Oberseite des Oberteils 64 sind Warnsymbole angebracht, die auf eine eventuell hohe Temperatur sowie Dampfentwicklung im Behälter 60 hinweisen.

Gut zu erkennen ist die spezielle Formgebung der Griffelemente 68 am Oberteil 64 bzw. der Griffelemente 66 am Unterteil 62. Am Oberteil 64 sind zwei abgerundete Vorsprünge zu erkennen, die im Abstand voneinander angeordnet sind, so dass sich zwischen den beiden Vorsprüngen 68 eine wellentalartige Ausnehmung ergibt. In der Ansicht der Fig. 15 ist durch diese wellentalartige Ausnehmung das Griffelement 66 am Unterteil 62 zu erkennen. Wird das Oberteil 64 in der in Fig. 15 gezeigten Position auf das Unterteil 62 aufgesetzt, so kann der Rastverschluss zwischen Oberteil 64 und Unterteil 62 in besonders einfacher Weise gelöst werden. Auf beiden Seiten wird jeweils der Daumen auf das Griffelement 66 des Unterteils 62 aufgelegt und Zeigefinger und Mittelfinger werden jeweils an einen der beiden Vorsprünge 68 angelegt, in der Darstellung der Fig. 15 also entweder der obere Vorsprung 68 oder der untere Vorsprung 68. Durch einfaches Drücken kann nun das Oberteil 64 mit geringem Kraftaufwand und kontrolliert vom Unterteil 62 abgehoben werden, indem der Rastverschluss zwischen Oberteil 64 und Unterteil 62 ausgerückt wird. Indem zwei Vorsprünge 68 vorgesehen sind und zwischen sich eine wellentalartige Vertiefung aufweisen, steht genügend Platz zur Verfügung, um den Daumen auf das Griffelement 66 des Unterteils aufzulegen und die beschriebene Offnungsweise des Behälters 60 kann von zwei unterschiedlichen Seiten her erfolgen, in der Darstellung der Fig. 15 kann ein Bediener somit unterhalb oder oberhalb des Behälters 60 stehen und diesen bequem öffnen.

Die Griffelemente 66, 68 sind jeweils abgerundet ausgebildet, so dass die Finger eines Bedieners flächig an den einander zugewandten Innenseiten der Griffelemente 68, 66 anliegen können.

Die Darstellung der Fig. 16 stellt eine Schnittansicht auf die Ebene XVI-XVI der Fig. 15 dar. In der Darstellung der Fig. 16 ist zu erkennen, dass ein Speisenteller 82 lediglich mit seinem unteren, umlaufenden Rand auf der Innenseite des Unterteils 62 aufliegt. Der Rand des Speisentellers 82 selbst liegt dadurch nicht am Unterteil 62 oder am Oberteil 64 an, sondern liegt in einem Abstand zur Innenfläche des Unterteils 62 bzw. des Oberteils 64. Kondenswasser, das sich an der Innenfläche des Oberteils 64 sammelt, kann dadurch am Rand des Oberteils 64 herunter laufen und ins Unterteil 62 abfließen, ohne die im Speisenteller 62 angeordneten Speisen zu befeuchten. Die Innenfläche des Oberteils 64, die den abgedichteten Innenraum zwischen Unterteil 62 und Oberteil 64 nach oben begrenzt, ist hierzu glattflächig und ohne Kanten oder Vorsprünge ausgeführt. Die Innenfläche kann darüber hinaus mit einer superhydrophoben Nanobeschichtung versehen sein, um das Ansammeln von Kondenswasser weitgehend zu verhindern. Anhand der Darstellung der Fig. 16 ist auch zu erkennen, dass die Innenfläche des Oberteils 64 auch im Deckelbereich nach außen gewölbt ausgebildet ist und somit eine durchgehende, nach außen gerichtete Krümmung mit nicht konstantem Radius aufweist. Der Deckelbereich der Innenfläche hat dadurch die Form eines Kugelabschnitts mit sehr großem Durchmesser. Dieser Deckenbereich geht dann ohne umlaufende Kante, sondern mittels eines Übergangsradius in die ebenfalls abgerundet ausgebildeten Seitenflächen über. Kondenswasser, das sich im Deckelbereich des Oberteils 64 niederschlägt, kann dadurch der Schwerkraft folgend nach außen abfließen und gelangt über die Seitenflächen der Innenfläche des Oberteils 64 dann ins Unterteil 62.

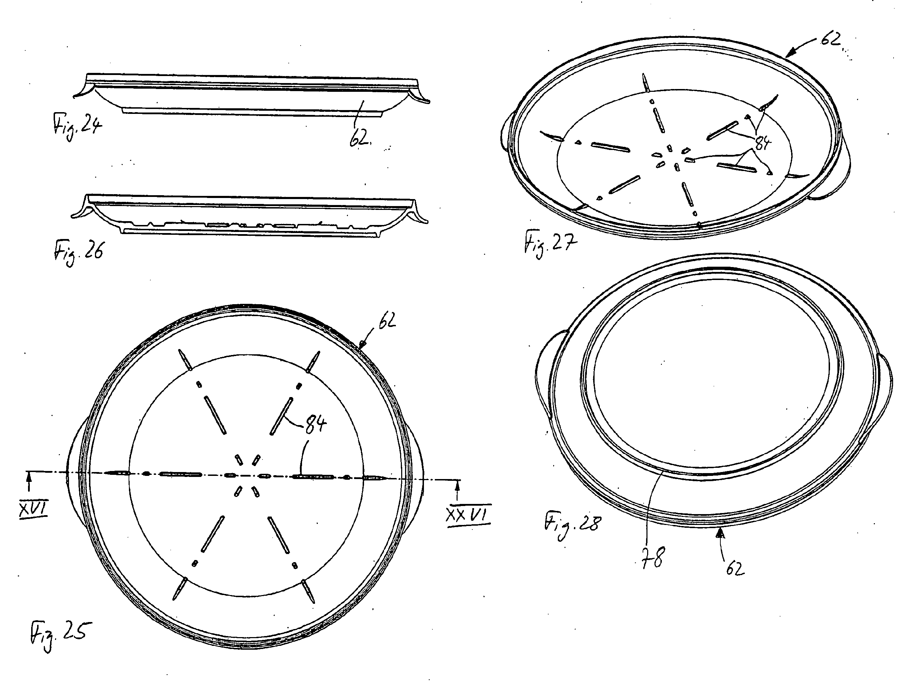

Das Unterteil 62 ist mit sternförmig aufeinander zu laufenden Rippen 84 versehen, die in Fig. 27 gut zu erkennen sind. Diese Rippen 84 sind unterbrochen ausgeführt, um für die umlaufenden Vorsprünge an der Unterseite gängiger Speisenteller 62 Anschläge bereitzustellen, damit auch Speisenteller unterschiedlicher Größe mittels der Rippen 84 zentriert im

Unterteil 62 aufgenommen werden können. In der Darstellung der Fig. 16 ist gut zu erkennen, dass der untere umlaufende Rand des Speisentellers 82 innen am radial äußersten Abschnitt der Rippe 84 anliegt und dadurch in seiner Lage zum Unterteil 62 zentriert und in radialer Richtung fixiert angeordnet ist.

Anhand der Darstellung der Fig. 16 ist zu erkennen, dass das Unterteil 62 an seinem oberen Ende durch einen umlaufenden Vorsprung oder Kragen 86 begrenzt ist, der einen trapezförmigen Querschnitt aufweist. Eine Außenfläche dieses Kragens 86 ist kegelstumpfförmig und verjüngt sich in der Richtung, in der das Oberteil 64 vom Unterteil 62 abgehoben wird. Eine Innenfläche des Kragens 86 ist ebenfalls kegelstumpfförmig, wobei sich die Innenfläche aber in der Richtung, in der das Oberteil 64 vom Unterteil 62 abgehoben wird, erweitert. Insgesamt erhält der Kragen 86 dadurch einen trapezförmigen Querschnitt.

Der Kragen 86, wie in Fig. 16 zu erkennen ist, von der Schürze 70 des Oberteils 64 außen übergriffen, an deren unteren Ende eine nach innen vorragende Rastnase 88 angeordnet ist. Diese Rastnase 88 weist eine schräge Rastfläche auf, die an einem unteren Rand des trapezförmigen Kragens 86 anliegt. Die Rastnase 88 ist dadurch unter den Rand des trapezförmigen Kragens 86 eingerastet und hält das Oberteil 64 zuverlässig am Unterteil 62. Der untere, äußere Rand des trapezförmigen Kragens 86 ist ebenfalls mit einer abgeschrägten Rastfläche versehen, die winkelmäßig auf die schräge Rastfläche an dem Rastvorsprung 88 abgestimmt ist. Ein in der Darstellung der Fig. 16 unten innen liegender Rand des Rastvorsprungs 88 weist eine Einführschräge 90 auf. Die Einführschräge 90 läuft auf die Mittelachse des Behälters 60 zu und die durch die Einführschräge 90 gebildete kegelstumpfförmige Fläche verjüngt sich in der Richtung, in der das Oberteil 64 vom Unterteil 62 abgehoben wird. Mittels der Einführschräge 90 kann dadurch das Oberteil 64 in besonders einfacher Weise auf das Unterteil 62 aufgesetzt werden, da die Einführschräge 90 verursacht, dass die Schürze 70 nach außen gedrückt wird und der Rastvorsprung 88 über den unteren Rand des trapezförmigen Kragens 86 schnappen kann, um letztendlich die in der Fig. 16 dargestellte verrastete Stellung zu erreichen.

Die vergrößerte Einzelheit XVIII aus Fig. 16, die in Fig. 18 dargestellt ist, zeigt den Aufbau der Schürze 70 sowie des trapezförmigen Kragens 86 detaillierter. Es ist zu erkennen, dass die Außenfläche des im Querschnitt trapezförmigen Kragens 86 zwei Abschnitte aufweist, nämlich einen ersten, kegelstumpfförmigen Abschnitt 92 und einen zweiten, etwa zylinderförmigen Abschnitt 94. An den zylinderförmigen Abschnitt 94 schließt sich auf der, dem kegelförmigen Abschnitt 92 gegenüberliegenden Seite eine kegelstumpfförmige und schräg angeordnete Rastfläche 96 an. Die kegelstumpfförmige Rastfläche 96 geht dann in eine horizontale Fläche über, die dann wiederum in den schüsselförmigen Hauptkörper des Unterteils 62 übergeht. Der im Querschnitt trapezförmige Kragen 86 ist damit auf einer Art umlaufenden Balkon angeordnet, der sich ausgehend vom schlüsselförmigen Hauptteil des Unterteils 62 radial nach außen erstreckt.

Die Schürze 70 geht von einem sich radial nach außen erstreckenden Absatz des Oberteils 64 aus und zum Innenraum des Behälters 60 hin weist dieser Absatz eine horizontale Auflagefläche 100 auf. Eine Innenfläche der Schürze ist dann ausgehend von dieser Auflagefläche 100 durch eine kegelstumpfförmige Fläche definiert, die winkelmäßig der Neigung des kegelstumpfförmigen Abschnitts 92 des trapezförmigen Kragens 86 entspricht. Diese kegelstumpfförmige Innenfläche geht gegenüber dem zweiten, zylinderförmigen Abschnitt 94 dann ebenfalls in eine annähernd zylinderförmige Innenfläche über, die dann wiederum in die schräg zur Mittelachse des Behälters 60 angeordnete Rastfläche 98 übergeht. An die Rastfläche 98 schließt sich in Erstreckungsrichtung der Schürze 70, in der Darstellung der Fig. 18 also nach unten, eine weitere zylinderförmige Fläche an, die dann wiederum in die Einführschräge 90 am Rastvorsprung 88 übergeht.

Der Darstellung der Fig. 18 ist zu entnehmen, dass das Oberteil mit der Auflagefläche 100 auf der Oberseite des trapezförmigen Kragens 86 aufliegt. Die Auflagefläche 100 wird dabei gegen die Oberseite des Kragens 60 durch die Federwirkung der Schürze 70 gezogen, die über die parallel zueinander und aneinander anliegenden Rastflächen 96, 98 in eine parallel zur Mittelachse des Behälters 60 wirkende Kraft umgesetzt wird. Die Auflagefläche 100 und die Oberseite des Kragens 86 liegen dadurch dicht aneinander an und dichten den Innenraum des Behälters 60 nach außen hin ab. Beim Erhitzen von Speisen auf dem Teller 82 kann sich somit im Innenraum des Behälters 60 ein Überdruck ausbilden. Überschreitet dieser Überdruck einen vordefinierten Wert, der am Beispiel des Behälters 60 bei etwa 20mbar bis 30mbar liegt, wird die durch den Druck im Innenraum auf das Oberteil 64 ausgeübte Kraft größer als die Rastkraft, die mittels der Schürze 70 aufgebracht wird und die die Auflagefläche 100 gegen den Kragen 86 gedrückt hält. Das Oberteil 64 wird dadurch in der Darstellung der Fig. 18 nach oben gedrückt und der Rastvorsprung 88 wird über die aneinander anliegenden schrägen Rastflächen 96, 98 nach außen gedrückt, bis der Rastvorsprung 88 an der Außenfläche des Kragens 86 nach oben entlang gleiten kann. In diesem Zustand ist der Innenraum des Behälters 60 dann nicht mehr abgedichtet und ein Überdruck kann entweichen.

Die Darstellung der Fig. 17 zeigt eine Ansicht auf die Schnittebene XVII-XVII der Fig. 15. Zu erkennen sind die Griffelemente 66 am Unterteil 62. Es ist weiter zu erkennen, dass die Griffelemente 68 am Oberteil 64 nicht oberhalb des Griffelements 66, sondern in Umfangsrichtung gegenüber diesem versetzt angeordnet sind.

Es ist weiter zu erkennen, dass im Bereich der Griffelemente 68 zwar die umlaufende Auflagefläche 100 vorhanden ist, die über des gesamten Umfang dichtend auf der Oberseite des Kragens 86 aufliegt, dass eine sich an die Auflagefläche 100 anschließende Schürze 102 aber kürzer ausgeführt ist, sich infolgedessen lediglich ein Stück weit entlang der Außenfläche des Kragens 86 nach unten, in Richtung auf das Griffelement 66 zu erstreckt und auch nicht mit einem Rastvorsprung versehen ist.

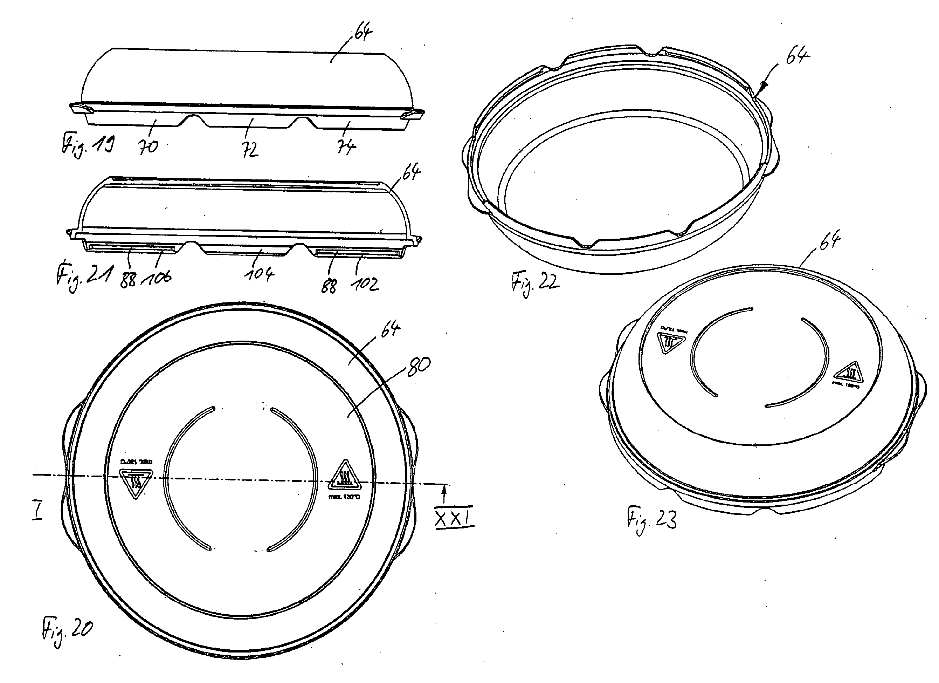

Die Darstellung der Fig. 19 zeigt das Oberteil 64 in einer Seitenansicht und die Darstellung der Fig. 20 zeigt das Oberteil 64 von oben. Gut zu erkennen ist in der Darstellung der Fig. 20 die Vertiefung 80 auf der Oberseite des Oberteils 64, in die ein Unterteil 62 eingesetzt und gegen Verschiebung gesichert werden kann, um mehrere Behälter 60 stapeln zu können.

Die Schnittansicht der Fig. 21 auf die Schnittebene XXI-XXI der Fig. 20 lässt gut erkennen, dass das zur Mittelachse des Behälters 60 achsensymmetrisch aufgebaute Oberteil 64 insgesamt 6 Schürzen 70, 72, 74, 102, 104, 106 aufweist, wobei lediglich die Schürzen 70, 74, 102, 106 mit einem Rastvorsprung 88 versehen sind. Die Schürzen 72, 104 weisen dahingegen keinen Rastvorsprung auf, wie bereits erläutert wurde. Ein Öffnungsdruck, bei dem sich das Oberteil 64 vom Unterteil 62 löst, kann über die Länge der Rastvorsprünge 88 in Umfangsrichtung beeinflusst werden. Um einen höheren Öffnungsdruck zu erreichen, könnten beispielsweise die Schürzen 72, 104 ebenfalls mit Rastvorsprüngen versehen werden.

Der achsensymmetrische Aufbau des Oberteils 64 ist auch in der perspektivischen Ansicht von schräg unten der Fig. 22, zu erkennen. Die Fig. 23 zeigt noch eine perspektivische Ansicht von schräg oben des Oberteils 64.

Die Darstellung der Fig. 24 zeigt das Unterteil 62 in einer Seitenansicht. Eine Ansicht des Unterteils 62 von oben ist in der Fig. 25 dargestellt. Gut zu erkennen ist die Anordnung der Rippen 84 im Unterteil. Wie bereits beschrieben wurde, sind die Rippen 84 durch konzentrische Zwischenräume unterbrochen, um Speisenteller unterschiedlicher Größe in radialer Richtung fixieren zu können. Insgesamt sind fünf, in Umfangsrichtung gleichmäßig voneinander beabstandete und jeweils in radialer Richtung gesehen unterbrochene Rippen 84 angeordnet. Die Anordnung der Rippen 84 ist auch in der Schnittansicht der Fig. 26 auf die Schnittebene XXVI der Fig. 25 zu erkennen.

Die Darstellung der Fig. 27 zeigt eine perspektivische Ansicht von schräg oben auf das Unterteil 62. Die Darstellung der Fig. 28 zeigt das Unterteil 62 von schräg unten. Gut zu erkennen ist der umlaufende Stapelrand 78 am Unterteil 62, der in die Ausnehmung 80 am Oberteil 64 eingesetzt werden kann.

Der Behälter 60 wurde bei einem von der Anmelderin durchgeführten Garversuch mit 300 g tiefgekühlten Mischgemüse auf dem Porzellanteller 82 bestückt. Nach dem Aufrasten des Oberteils 62 war der Innenraum mit dem tiefgekühlten Mischgemüse dicht verschlossen. Ein Mikrowellenofen mit 3200 W Leistung wurde auf volle Geräteleistung eingestellt und in Betrieb gesetzt. Über einen Drucksensor konnte ein Druckanstieg im Innenraum des Behälters 60 bis auf 29mbar beobachtet werden, wobei 29mbar Überdruck im Innenraum des Behälters 60 nach etwa 1,75 min oder 1 min/sec erreicht wurden. Bei 29mbar Innendruck öffnete sich der Behälter hörbar, indem sich der Rastverschluss zwischen Oberteil 64 und Unterteil 62 löste. In der Folge fiel der Überdruck im Innenraum auf null ab. Nach dem Öffnen des Behälters konnte festgestellt werden, dass das Mischgemüse wohlschmeckend und bissfest war und eine Durchschnittstemperatur von etwa 90°C aufwies. Kondenswasser hatte sich im Unterteil 62 gesammelt, nicht aber auf dem Mischgemüse oder dem Teller 82 selbst.

Ein weiterer Versuch wurde mit gekühltem Gemüse mit einer Temperatur von etwa 4°C durchgeführt. Bei voller Geräteleistung des Mikrowellenofens konnte nach etwa einer Minute das hörbare Ausrasten des Rastverschlusses zwischen Oberteil 64 und Unterteil 62 festgestellt werden. Ein Überdruck im Innenraum des Behälters 60 lag in diesem Fall bei etwa 20mbar. Die Temperatur des Gemüses betrug etwa 90°C. Der Behälter 60 wurde dann wieder verschlossen und 15 min. bei einer Umgebungstemperatur von 21 °C abgestellt. Nach 15 min. betrug die durchschnittliche Temperatur des Gemüses etwa 65°C und das Gemüse war wohlschmeckend und bissfest.

Bei einem weiteren Versuch wurde lediglich die halbe Geräteleistung des Mikrowellenofens eingestellt, wobei nach 2,25 min. ein Innenraumdruck von 10mbar beobachtet werden konnte. Nach Abschalten des Mikrowellenofens baute sich im Innenraum ein Unterdruck bis -27mbar auf. Dies bedeutet, dass sich der Rastverschluss zwischen Oberteil 64 und Unterteil 62 nicht gelöst hatte, so dass der Innenraum des Behälters 60 gegen die Umgebung immer noch abgedichtet war.

Insgesamt konnte mehreren Versuchen festgestellt werden, dass mit dem erfindungsgemäßen Behälter 60 eine Zeiteinsparung zwischen 20% und 25% gegenüber Herstellervorgaben für eine Garzeit erreicht werden kann. Neben der Zeitersparnis erhält man sehr wohlschmeckende Speisen, die nicht durch Kondenswasser benetzt sind.

## Patentansprüche

1. Behälter für Speisen mit einem Unterteil (12) und einem lösbar mit dem Unterteil (12) verbundenen Oberteil (14), wobei wenigstens das Oberteil (14) aus mikrowellendurchlässigem Material besteht und wobei das Oberteil (14) und das Unterteil (12) einen abgedichteten Innenraum (34) bilden, **dadurch gekennzeichnet, dass** das Unterteil (12) und das Oberteil (14) mittels eines Rastverschlusses miteinander verbunden sind, der bei einem vordefinierten Überdruck von weniger als 0,5 bar, insbesondere weniger als 0,05 bar, im Innenraum (34) eine Verbindung zwischen Unterteil (12) und Oberteil (14) freigibt, wobei der Rastverschluss wenigstens eine Rastnase (42) aufweist, die einen Rastvorsprung hintergreift und wobei die Rastnase (42) und/oder der Rastvorsprung eine Rastfläche (46) aufweist, die in Bezug auf eine Richtung, in der Oberteil (14) und Unterteil (12) voneinander getrennt werden können, schräg angeordnet ist.

2. Behälter für Speisen nach Anspruch 1, **dadurch gekennzeichnet, dass** die Rastfläche (46) von einer Mittelachse des Behälters nach außen weisend angeordnet ist.

3. Behälter nach Anspruch 1 oder 2, **dadurch gekennzeichnet, dass** der vordefinierte Überdruck kleiner oder gleich 0,3 bar, insbesondere kleiner oder gleich 40mbar, ist.

4. Behälter nach einem der vorstehenden Ansprüche, **dadurch gekennzeichnet, dass** das Unterteil (12) oder das Oberteil (14) wenigstens einen umlaufenden und im wesentlichen parallel zu einer Richtung, in der Oberteil (14) und Unterteil (12) voneinander getrennt werden können, sich erstreckenden Vorsprung (44) aufweist, der eine kegelstumpfförmige Außenfläche aufweist, die sich in der Richtung verjüngt, in der Oberteil und Unterteil voneinander getrennt werden können, und dass am Oberteil (14) bzw. am Unterteil (12) eine passende kegelstumpfförmige, umlaufende Gegenfläche vorgesehen ist.

5. Behälter nach Anspruch 4, **dadurch gekennzeichnet, dass** am Oberteil (14) bzw. am Unterteil (12) eine zu dem Vorsprung (44) passende umlaufende Rinne (48) zum wenigstens abschnittsweisen Aufnehmen des Vorsprungs (44) vorgesehen ist, wobei der Vorsprung (44) und die Rinne (48) einen trapezförmigen Querschnitt aufweisen, der sich in der Richtung, in der Oberteil (14) und Unterteil (12) voneinander getrennt werden können, verjüngt.

6. Behälter nach wenigstens einem der vorstehenden Ansprüche, **dadurch gekennzeichnet, dass** das Oberteil (14) und/oder das Unterteil (12) aus flexiblem und spülmaschinenfestem Kunststoff bestehen.

7. Behälter nach wenigstens einem der vorstehenden Ansprüche, **dadurch gekennzeichnet, dass** das Unterteil (12) zum Aufnehmen eines Speisentellers (36) vorgesehen ist und Auflagevorsprünge (40) aufweist, um den Speisenteller (36) in Umfangsrichtung gesehen lediglich abschnittsweise zu unterstützen.

8. Behälter nach wenigstens einem der vorstehenden Ansprüche, **dadurch gekennzeichnet, dass** das Unterteil (12) im Bereich seiner Standfläche wenigstens einen Stapelvorsprung (24) und/oder wenigstens eine Stapelvertiefung aufweist, und dass das Oberteil (14) an seiner Oberseite (14) eine passende Stapelvertiefung (26) beziehungsweise einen passenden Stapelvorsprung aufweist.

9. Behälter nach weinigstens einem der vorstehenden Ansprüche, **dadurch gekennzeichnet, dass** eine den Innenraum (34) begrenzende Innenfläche des Oberteils (12) glattflächig und ohne Vorsprünge ausgebildet ist.

10. Behälter nach Anspruch 9, **dadurch gekennzeichnet, dass** die Innenfläche des Oberteils (14) mit einer superhydrophoben Nanobeschichtung versehen ist.

## Claims

1. Container for food having a lower part (12) and an upper part (14) detachably connected to the lower part (12), where at least the upper part (14) comprises a microwave-permeable material and where the upper part (14) and the lower part (12) form a sealed-off interior space (34), **characterized in that** the lower part (12) and the upper part (14) are connected to one another by means of a snap closure which at a predefined gauge pressure of less than 0.5 bar, in particular less than 0.05 bar, releases a connection between the lower part (12) and the upper part (14) inside the interior space (34), where the snap closure has at least one engaging tab (42) gripping behind an engaging projection and where the engaging tab (42) and/or the engaging projection has an engaging surface (46) which is arranged obliquely relative to a direction in which the upper part (14) and the lower part (12) can be separated from one another.

2. Container for food according to Claim 1, **characterized in that** the engaging surface (46) is arranged facing outwards from a central axis of the container.

3. Container according to Claim 1 or 2, **characterized in that** the predefined gauge pressure is lower than or equal to 0.3 bar, in particular lower than or equal to 40 mbar.

4. Container according to one of the preceding claims, **characterized in that** the lower part (12) or the upper part (14) has at least one all-round projection (44) extending substantially parallel to that direction in which the upper part (14) and the lower part (12) can be separated from one another and having a frustum-shaped outer surface tapering **in that** direction in which the upper part and the lower part can be separated from one another, and **in that** a matching frustum-shaped and all-round mating surface is provided on the upper part (14) or the lower part (12).

5. Container according to Claim 4, **characterized in that** on the upper part (14) or on the lower part (12) an all-round channel (48) matching the projection (44) is provided for receiving the projection (44) at least in some sections, where the projection (44) and the channel (48) have a trapezoidal cross-section tapering **in that** direction in which the upper part (14) and the lower part (12) can be separated from one another.

6. Container according to at least one of the preceding claims, **characterized in that** the upper part (14) and/or the lower part (12) comprise flexible and dishwasher-resistant plastic.

7. Container according to at least one of the preceding claims, **characterized in that** the lower part (12) is intended for holding a food plate (36) and has support projections (40) for supporting the food plate (36) only in some sections when viewed in the circumferential direction.

8. Container according to at least one of the preceding claims, **characterized in that** the lower part (12) has in the area of its standing surface at least one stacking projection (24) and/or at least one stacking recess, and **in that** the upper part (14) has on its upper side a matching stacking recess (26) or matching stacking projection respectively.

9. Container according to at least one of the preceding claims, **characterized in that** an inner surface of the upper part (14) limiting the interior space (34) is designed with a smooth surface and without projections.

10. Container according to Claim 9, **characterized in that** the inner surface of the upper part (14) is provided with a superhydrophobic nano-coating.

## Revendications

1. Récipient pour plats préparés comprenant une partie inférieure (12) et une partie supérieure (14) reliée de manière détachable à la partie inférieure (12), sachant qu'au moins la partie supérieure (14) est constituée d'un matériau perméable aux micro-ondes et que la partie supérieure (14) et la partie inférieure (12) forment un espace intérieur (34) étanche, **caractérisé en ce que** la partie inférieure (12) et la partie supérieure (14) sont reliées entre elles au moyen d'une fermeture par crantage qui, sous une surpression prédéfinie dans l'espace intérieur (34) inférieure à 0,5 bar, en particulier inférieure à 0,05 bar, permet une liaison entre la partie inférieure (12) et la partie supérieure (14), sachant que la fermeture par crantage présente au moins un taquet de crantage (42) qui s'engage en prise arrière dans un épaulement de crantage, et que le taquet de crantage (42) et/ou l'épaulement de crantage présente(nt) une surface de crantage (46) disposée de manière inclinée par rapport à une direction dans laquelle la partie supérieure (14) et la partie inférieure (12) peuvent être séparées l'une de l'autre.

2. Récipient pour plats préparés selon la revendication 1, **caractérisé en ce que** la surface de crantage (46) est orientée vers l'extérieur par rapport à un axe médian du récipient.

3. Récipient selon la revendication 1 ou 2, **caractérisé en ce que** la surpression prédéfinie est inférieure ou égale à 0,3 bar, en particulier inférieure ou égale à 40 mbar.

4. Récipient selon l'une des revendications précédentes, **caractérisé en ce que** la partie inférieure (12) ou la partie supérieure (14) présente au moins un épaulement (44) s'étendant sur le pourtour et pour l'essentiel parallèlement à une direction dans laquelle la partie supérieure (14) et la partie inférieure (12) peuvent être séparées l'une de l'autre, lequel épaulement présente une surface extérieure tronconique qui décroît dans la direction dans laquelle la partie supérieure et la partie inférieure peuvent être séparées l'une de l'autre, et que sur la partie supérieure (14) ou sur la partie inférieure (12) est prévue sur le pourtour une surface antagoniste tronconique correspondante.

5. Récipient selon la revendication 4, **caractérisé en ce que** sur la partie supérieure (14) ou sur la partie inférieure (12) est prévue sur le pourtour une rainure (48) correspondant à l'épaulement (44) et destinée à loger au moins partiellement l'épaulement (44), l'épaulement (44) et la rainure (48) présentant une section trapézoïdale qui décroît dans la direction dans laquelle la partie supérieure (14) et la partie inférieure (12) peuvent être séparées l'une de l'autre.

6. Récipient selon au moins une des revendications précédentes, **caractérisé en ce que** la partie supérieure (14) et/ou la partie inférieure (12) est/sont constituée(s) d'une matière synthétique souple et lavable en lave-vaisselle.

7. Récipient selon au moins une des revendications précédentes, **caractérisé en ce que** la partie inférieure (12) est prévue pour loger une assiette de nourriture (36) et présente des saillies portantes (40) afin de soutenir l'assiette de nourriture (36) seulement partiellement vu dans le sens circonférentiel.

8. Récipient selon au moins une des revendications précédentes, **caractérisé en ce que** dans la zone de sa surface d'appui, la partie inférieure (12) présente au moins une saillie d'empilage (24) et/ou au moins un évidement d'empilage, et que la partie supérieure (14) présente sur sa face supérieure un évidement d'empilage (26) correspondant ou une saillie d'empilage correspondante.

9. Récipient selon au moins une des revendications précédentes, **caractérisé en ce qu'**une surface intérieure de la partie supérieure (14) délimitant l'espace intérieur (34) est une surface lisse et sans saillies.

10. Récipient selon la revendication 9, **caractérisé en ce que** la surface intérieure de la partie supérieure (14) est munie d'un nanorevêtement superhydrophobe.
